# EUROPÄISCHE PATENTSCHRIFT

(11) **EP 0 935 220 B1**
(45) Veröffentlichungstag und Bekanntmachung des Hinweises auf die Patenterteilung: **17.12.2003**
(21) Anmeldenummer: 99101836.7
(22) Anmeldetag: 28.01.1999
(51) Int. Cl.: G01P 1/12, G07C 7/00, G07C 5/12, G01D 15/32

(54) **Fahrtschreiber mit einem quaderförmigen Gehäuse**
Tachograph with a parallelepipedal housing
Tachygraphe avec un boîtier parallélépipédique

(30) Priorität: 06.02.1998 DE 19804647
(43) Veröffentlichungstag der Anmeldung: 11.08.1999
(73) Patentinhaber: SIEMENS AKTIENGESELLSCHAFT, 80333 München (DE)
(72) Erfinder: Höni, Helmut, Dipl.-Ing. (FH), 78733 Aichhalden (DE); Riester, Thomas, Dipl.-Ing. (FH), 78052 Villingen-Schwenningen (DE); Säger, Benjamin, Dilp.-Ing. (FH), 78050 Villingen-Schwenningen (DE); Lange, Roland, Dipl.-Ing. (FH), 78086 Brigachtal (DE); Kaiser, Siegfried, Dipl.-Ing. (FH), 78052 Villingen-Schwenningen (DE)

(56) Entgegenhaltungen:
- EP-A- 0 794 499
- EP-A- 0 899 697
- DE-A- 19 545 354
- DE-U- 9 317 101

## Beschreibung

Die Erfindung betrifft einen Fahrtschreiber mit einem quaderförmigen Gehäuse, in welchem zur sichtbaren Darstellung von Fahrtdaten Diagrammscheiben Anwendung finden, für deren Halterung ein Diagrammscheibenträger vorgesehen und derart angeordnet ist, daß die Diagrammscheiben zwischen einer Registrierposition innerhalb des Gehäuses, in welcher der Diagrammscheibenträger spielfrei verriegelt ist, und einer von außen zugänglichen Einlege-/Entnahmeposition, in welcher der Diagrammscheibenträger an einem Anschlag anliegt, bewegbar sind und der Diagrammscheibenträger zwischen der Registrierposition und der Einlege-/Entnahmeposition geradlinig verschiebbar und um eine dem Diagrammscheibenträger zugeordnete Achse schwenkbar ist, wobei die Achse mit dem Herausziehen des Diagrammscheibenträgers in eine stabile Gelenkposition bringbar ist.

Ein solcher Fahrtschreiber ist aus dem nachveröffentlichten Dokument EP 0 899 697 A2 (Stand der Technik nach Artikel 54(3) & (4) EPÜ) bekannt.

Die Verwendung von Diagrammscheiben, die den Vorzug haben, einen relativ leicht handhabbaren dezentralen Datenspeicher darzustellen, dessen Inhalt als Sofortinformation unmittelbar, das heißt ohne technische Hilfsmittel verwenden zu müssen, lesbar ist und somit bei stichprobenweisen Kontrollen die Fahrtdaten eines Transportauftrages, einer Schicht oder eines Arbeitstages sowie das Einhalten der Arbeitszeitrichtlinien sozusagen auf einen Blick überschaubar macht, erfordert eine für den Fahrer ergonomisch günstige Anordnung des Fahrtschreibers. Das heißt, der Fahrtschreiber muß wegen des Einlegens und Entnehmens der Diagrammscheiben in einem für den Fahrer bequem zugänglichen Handhabungsbereich angeordnet werden.

Um andererseits einen möglichst großen Handhabungsbereich nutzen zu können und die Instrumentendichte im unmittelbaren Sichtbereich des Fahrers zu verringern, ist bereits ein Fahrtschreiberkonzept vorgeschlagen worden, bei dem die Tachometerfunktion der bisher üblichen Fahrtschreiber von der Registrierfunktion getrennt ist und die beiden räumlich getrennt anordenbaren Geräte durch eine geeignete Datenkopplung verbunden sind. Die Trennung von Anzeige und Registrierung, genauer gesagt die Zuordnung eines die Tachometerfunktion übernehmenden Zeigerinstrumentes zum eigentlichen Fahrtschreiber, ermöglicht auch mehr Freiheit in der Gestaltung des Fahrtschreibers bzw. dessen Gehäuses, das heißt, es kann beispielsweise ein Fahrtschreiber in Radiofachformat angestrebt werden, der bei den gegebenen Raumstrukturen innerhalb einer Fahrzeugkabine vielseitiger angebracht werden kann als Fahrtschreiber mit anderen Formaten. Das heißt, Anordnungen des Fahrtschreibers außerhalb des Armaturenbretts, beispielsweise in der Fahrzeugtüre, in oder neben einer Mittelkonsole oder in einem Dachunterbau sind möglich.

Wird für einen solchen Fahrtschreiber ein Registrierkonzept angewandt, bei dem die Diagrammscheiben durch einen Schlitz an der Frontseite des Gerätes vorgesteckt und selbsttätig zwischen einer Registrierposition im Gerät und einer Eingabe-/Entnahmeposition an der Frontseite des Gerätes transportiert werden, so sind zwar die Anforderungen an die subjektive Sorgfalt des Bedienenden gering, der technische Aufwand, mit dem der automatische Transport und das uhrzeitrichtige Zentrieren der Diagrammscheiben erzielt werden, sehr hoch. Findet dementsprechend ein Fahrtschreiber Anwendung, bei welchem ein Diagrammscheibenträger aus einem ebenfalls quaderförmigen, und relativ flachen Gehäuse herauszieh- bzw. motorisch herausfahrbar angeordnet ist, so ergeben sich bei einem zur Horizontalen relativ steilen Einbau des Gerätes oder bei einer "Über-Kopf-Anordnung" erhebliche Probleme beim Auffädeln der Diagrammscheiben auf den an der uhrzeitrichtig angetriebenen Diagrammscheibenauflage ausgebildeten Zentrier- und Mitnahmedorn.

Mit der DE-G 93 17 101.3 ist, was den Einbau eines Fahrtschreibers der gattungsgemäßen Bauform in einem Dachunterbau eines Fahrzeuges anbelangt schon vorgeschlagen worden, einen Träger vorzusehen, der schwenkbar im Dachunterbau eines Fahrzeuges gelagert ist. Eine solche Lösung kann verständlicherweise nicht an jedem Einbauort realisiert werden; sie ist auch nicht für eine Nachrüstung geeignet.

Es war somit die Aufgabe gestellt, den gattungsgemäßen Fahrtschreiber mit möglichst geringen Aufwand so umzugestalten, daß durch eine Verbesserung der Handhabung der Diagrammscheiben die Einbaumöglichkeiten in einem größeren Umfange genutzt werden können.

Die Lösung der Aufgabe ist darin zu sehen, daß die dem Diagramm scheibenträger zugeordnete Achse in mit Langlöchern versehene Gelenkschienen eingreift und daß die Gelenkschienen längsverschiebbar derart gelagert sind, daß das jeweils eine Langlochende beim Verschieben des Diagrammscheibenträgers außerhalb des Gehäuses bringbar ist.

Vorteilhafte Ausgestaltungen der Erfindung beschreiben die Unteransprüche.

Die Erfindung bietet den Vorzug, daß die Zugänglichkeit der Diagrammscheibenauflage bei einer Vielzahl von Einbaulagen des Fahrtschreibers verbessert und somit eine größere Freiheit bei der Ausgestaltung einer Fahrzeugkabine gegeben ist. Bezüglich des bevorzugten Ausführungsbeispiels, das nachfolgend anhand von Zeichnungen näher beschrieben wird, sind insbesondere der geringe Raumbedarf für die ein Verschwenken des Diagrammscheibenträgers ermöglichenden Mittel, die für ein verkantungsfreies Führen des Diagrammscheibenträgers vorgesehenen Maßnahmen sowie die Vorkehrungen hervorzuheben, die eine stabile Lagerung des Diagrammscheibenträgers in der Gelenkposition schaffen.

Von den Zeichnungen zeigen:
- Figur 1: eine Frontansicht eines erfindungsgemäßen Fahrtschreibers,
- Figur 2: eine Seitenansicht des Fahrtschreibers gemäß Figur 1 mit in der Einlege-/Entnahmeposition befindlichem Diagrammscheibenträger,
- Figur 3: eine vergrößerte Darstellung der Anschlag- und Gelenkmittel in der in Figur 2 gezeigten Position,
- Figur 4: eine der einen Seitenwand des Gehäuses zugeordneten Führungsmechanik des Diagrammscheibenträgers in einer Stellung, bei der sich der Diagrammscheibenträger in der Gelenkposition befindet und die Gelenkschienen verriegelt sind,
- Figur 5: die Führungsmechanik in einem Zustand, bei dem sich der Diagrammscheibenträger in der Registrierposition befindet,
- Figur 6: die Führungsmechanik gemäß Figur 4, wobei sich die Gelenkschienen in der Gelenkposition und der Diagrammscheibenträger in einer Greifposition befinden,
- Figur 7: die Führungsmechanik gemäß Figur 6 mit einem dieser zugeordneten, schematisch dargestellten Diagrammscheibenträger,
- Figur 8: eine teilweise Rückansicht des Fahrtschreibers bei in der Registrierposition befindlichem Diagrammscheibenträger mit einer Schnittdarstellung der Führungsmechanik,
- Figur 9: eine schematische Darstellung eines weiteren Ausführungsbeispiels mit innerhalb des Gehäuses liegenden Anschlägen für den Diagrammscheibenträger.

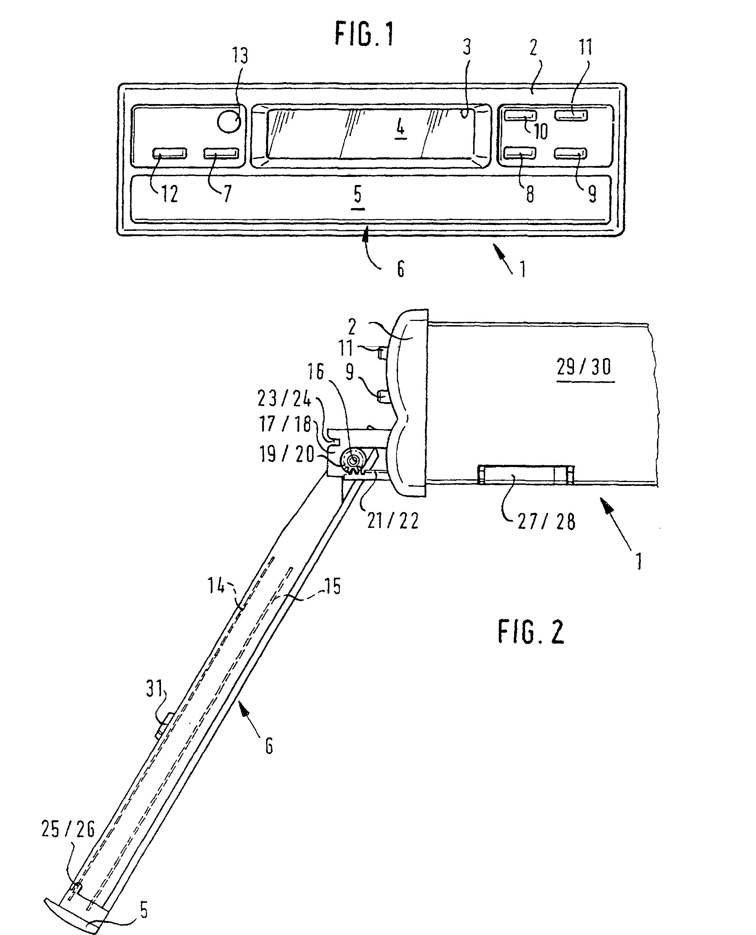

In Figur 1 ist mit 1 das quaderförmige Gehäuse des als Ausführungsbeispiel gewählten Fahrtschreibers bezeichnet, an dessen Frontwand 2 ein Fensterausschnitt 3 für ein der Frontwand 2 zugeordnetes Display 4 ausgebildet ist. 5 stellt die frontseitige Blende eines in dem Gehäuse 1 geführten Diagrammscheibenträgers 6 dar. Von in der Frontwand 2 gelagerten Tasten 7, 8, 9, 10, 11 und 12 sind die Tasten 7 und 8 sowie die als Menütaste bezeichnete Taste 9 dem Fahrer beziehungsweise dem Beifahrer zum Anwählen wenigstens der wichtigsten Arbeitszeitdaten zugeordnet. Die Tasten 10 und 11 dienen dem Vor- und Rückwärtsblättern in den jeweils angewählten Datensätzen, die Taste 12 ist für das Entriegeln und Freigeben des Diagrammscheibenträgers 6 vorgesehen. Mittels einer mit 13 bezeichneten Plombe ist der Zugang zu einer Diagnosebuchse gesichert.

Wie aus der Figur 2 hervorgeht, ist der Diagrammscheibenträger 6 in der Einlege-/Entnahmeposition gegenüber der Führungsebene innerhalb des Fahrtschreibers um einen bestimmten Winkel, der in möglichst vielen Einbaulagen eine zufriedenstellende Handhabung der Diagrammscheiben 14, 15 gestattet, verschwenkt. Das heißt, eine Stützwelle 1 6, auf der der Diagrammscheibenträger 6 drehbar gelagert ist, befindet sich in einer stabilen Gelenkposition außerhalb des Gehäuses 1 , wobei die Gelenkposition durch im Gehäuse 1 verschiebbar gelagerte Gelenkschienen 17, 18 vorgegeben ist. Wie aus der Figur 2 ferner ersichtlich ist sind auf der Stützwelle 16 beidseitig Ritzel 19, 20 befestigt und diesen in den Gelenkschienen 17, 18 ausgebildete Verzahnungen 21, 22 zugeordnet. Mit 23, 24 sind an den Stirnseiten der Gelenkschienen 17, 18 angebrachte Schlitze bezeichnet, denen am Diagrammscheibenträger 6 angeformte Stege 25, 26 zur Schaffung einer spielfreien Verebindung zwischen den Gelenkschienen 17, 18 und dem Diagrammscheibenträger 6 zugeordnet sind. Mit 27, 28 sind in den Seitenwänden 29, 30 des Gehäuses 1 vertieft liegend ausgebildete Begrenzungsanschläge für Sperrfedern bezeichnet, welche an einem dem Einbau des Fahrtschreibers dienenden Rahmen ausgebildet sind. Zum Ausbau des Fahrtschreibers aus dem betreffenden Armaturenbrett können die Sperrfedern nach dem Abnehmen der Frontwand 2 mittels eines flachen Werkzeuges angehoben werden.

Der Vollständigkeit halber sei erwähnt, daß die beiden schematisch in den Diagrammscheibenträger 6 eingezeichneten, Fahrer und Beifahrer zugeordneten Diagrammscheiben 14 und 15 in der üblichen Weise einer mit einem unrund ausgebildeten Zentrier- und Mitnahmedorn versehenen Auflage zugeordnet sind, die von einem Laufwerk uhrzeitrichtig angetrieben wird. Die beiden Diagrammscheibn 14, 15 sind durch eine in Figur 2 nicht dargestellte, schwenkbar gelagerte Platte getrennt, wobei die Platte der obenliegenden Diagrammscheibe 14 als Registrierunterlage dient und in ihr wenigstens ein auf der untenliegenden Diagrammscheibe 15 aufzeichnendes Registrierorgan gelagert ist. Mit 31 ist ein am Zentrier- und Mitnahmedorn zentral und in sich federnd ausgebildeter Zapfen bezeichnet, der dem Aufrasten eines Spannelementes dient, welches für das Niederhalten der Diagrammscheiben 14 und 15 auf der Diagrammscheibenauflage 6 im Gehäuse 1 des Fahrtschreibers gelagert ist.

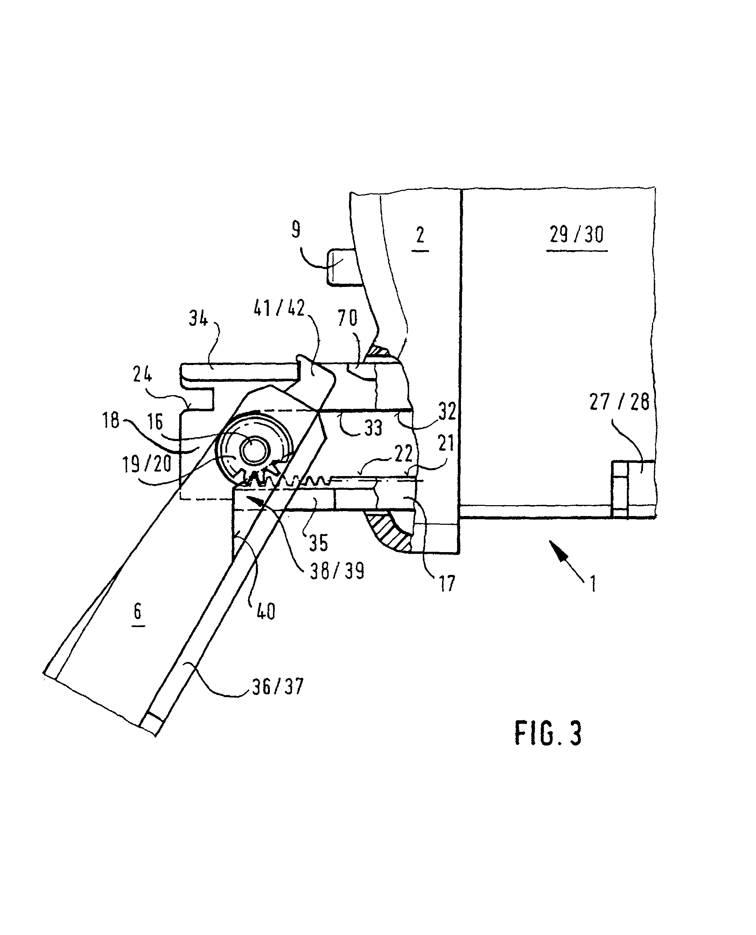

Wie insbesondere aus der Figur 3 hervorgeht befindet sich der Diagrammscheibenträger 6 in der dargestellten Einlege-/Entnahmeposition in einer Anschlagstellung an den Gelenkschienen 17, 18, die ihrerseits, was im folgenden noch näher erläutert wird, in der das Verschwenken des Diagrammscheibenträgers 6 ermöglichenden Gelenkposition verriegelt sind. In jeder der Gelenkschienen 17, 18 ist ein Langloch 32, 33 ausgebildet, an dessen jeweils einer Wand die den Ritzeln 19, 20 zugeordnete Verzahnungen 21, 22 angeformt sind. Ferner sind an den Gelenkschienen 17, 18 Führungsleisten ausgebildet, von denen die an der Gelenkschiene 18 vorgesehenen mit 34 und 35 bezeichnet sind. Mit 36, 37 sind den Führungsleisten 35 zugeordnete Freischnitte an dem Diagrammscheibenträger 6 benannt. An weiteren Freisparungen 38, 39 sind Anschlägflächen ausgebildet, von denen in Figur 3 eine mit 40 bezeichnet ist. Mit diesen Anschlägflächen 40 wirken die nicht bezeichneten Stirnflächen der Führungsleisten 35 in der Anschlagstellung des Diagrammscheibenträgers 6 zusammen. Außerdem sind in der Anschlagstellung am Diagrammscheibenträger 6 angeformte Fangarme 41, 42 wirksam, indem diese an nicht bezeichneten Stirnflächen der Führungsleisten 34 anliegen. Die Fangarme 41, 42 können beispielsweise auch an im Diagrammscheibenträger 6 verschiebbar und gefedert gelagerten Schienen angeformt sein. Ferner sei noch erwähnt, daß die Führungsleisten 35 teilweise konsolenartig verbreitert ausgebildet sind, um im Zusammenwirken mit den Fangarmen 41, 42 einen Überhub des Diagrammscheibenträgers 6 beim Anheben und Einführen in das Gehäuse 1 zu vermeiden.

Im folgenden sei die Führungsmechanik des Diagrammscheibenträgers 6 innerhalb des Gehäuses 1 näher beschrieben, wobei die Beschreibung wegen der Identität der beidseitig des Diagrammscheibenträgers 6 vorgesehenen Bauteile lediglich auf eine Seite beschränkt ist.

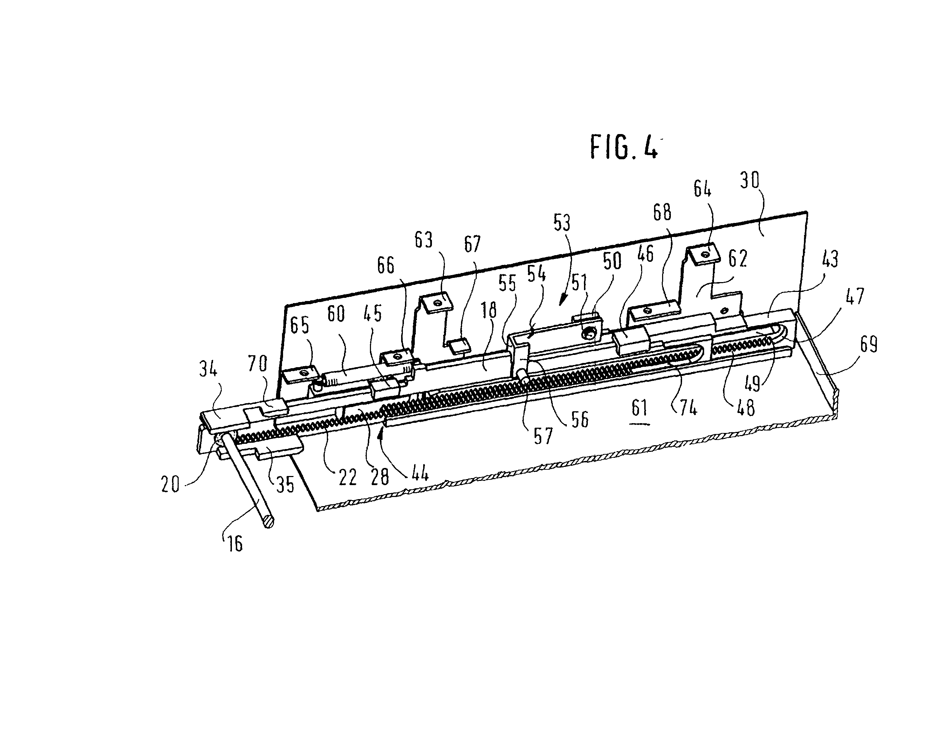

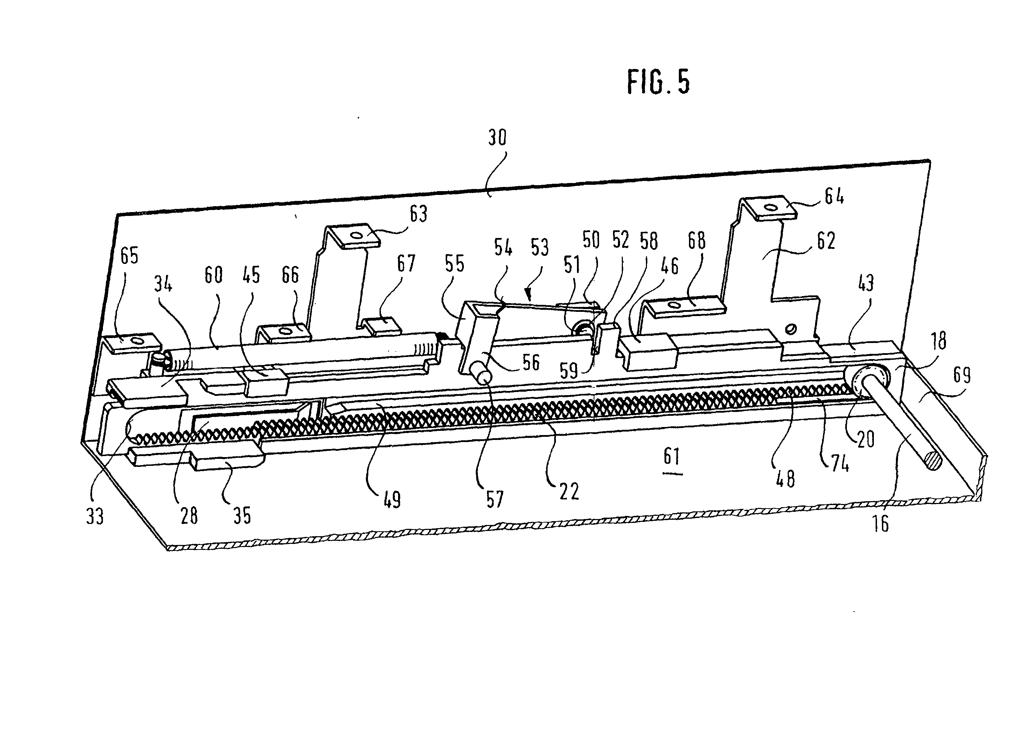

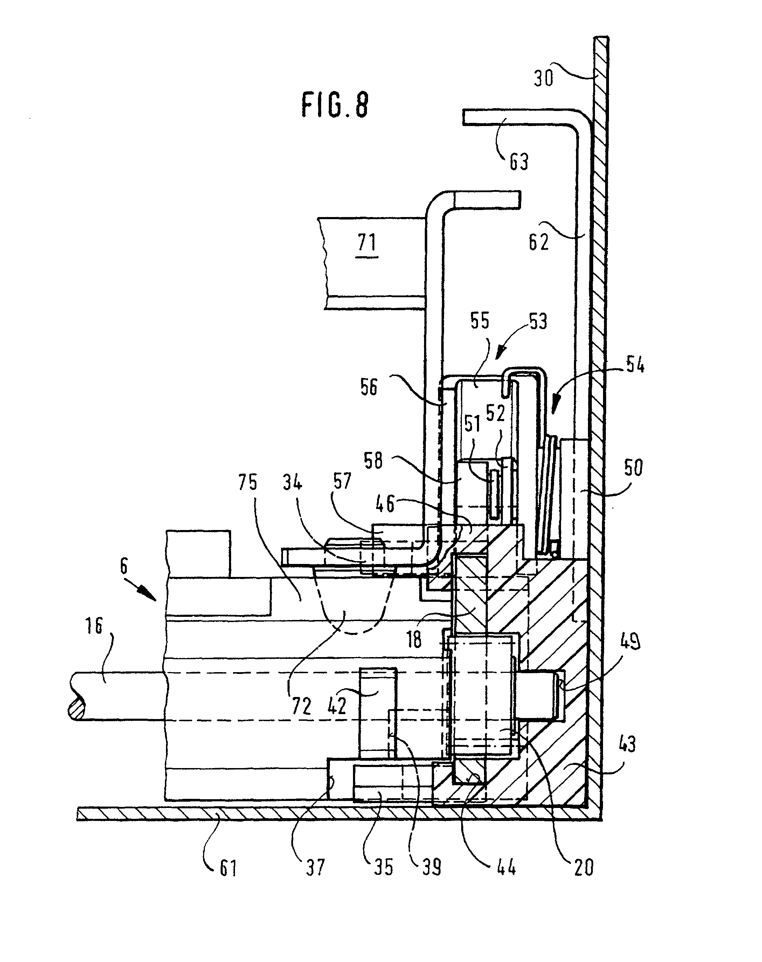

Wie aus der Figur 4, die eine Funktionsstellung zeigt, bei der sich der Diagrammscheibenträger 6 in der Gelenkposition befindet und die Gelenkschiene 18 verriegelt ist, hervorgeht, ist die Gelenkschiene 18 in einer Führungsschiene 43 verschiebbar und weitgehend spielfrei gelagert. Dabei sind einerseits eine durchgehende, der Gelenkschiene 18 angepaßte, u-förmige Rinne 44 andererseits zwei Führungsbacken 45, 46 an der Führungsschiene 43 angeformt. Die Führungsschiene 43 ist ebenso wie die Gelenkschiene 18 mit einem Langloch beziehungsweise mit einem Schlitz 47 versehen, dessen Wand eine Verzahnung 48 trägt. Dabei sind, wie eindeutig aus der Figur 8 ersichtlich ist, die Verzahnung 22 und die Breite des Langlochs 33 der Gelenkschiene 18 identisch mit der in der Führungsschiene 43 ausgebildeten Verzahnung 48 und der Breite des Schlitzes 47. Ferner ist in der Führungsschiene 43 eine der Stützwelle 16 zugeordnete Führungsnut 49 ausgebildet. Ein ebenfalls an der Führungsschiene 43 angeformter Lagerschenkel 50 dient der Befestigung einer Achse 51, auf welcher ein in geeigneter Weise gestalteter, mit einer Sicherungsscheibe 52 axial gesicherter Winkelhebel 53 gelagert ist. Der Winkelhebel 53 steht unter der Wirkung einer Schenkelfeder 54 und umgreift mit einem Steg 55 und einem daran angeformten Schenkel 56, der einen Taststift 57 trägt, die Gelenkschiene 18. Der Winkelhebel 54 wirkt mittels des Steges 55 mit einem als Anschlag dienenden, an der Gelenkschiene 18 ausgebildeten Pfeiler 58 zusammen und dient in Wirkverbindung mit einem an der Stirnseite des Pfeilers 58 in der Gelenkschiene 18 ausgebildeten Sicherungsschlitz 59 als Riegel. Die nicht bezeichneten Schenkel der Schenkelfeder 54 stützen sich, wie insbesondere die Figur 8 zeigt, einerseits an dem Winkelhebel 53 andererseits an der Führungsschiene 43 ab. Der Pfeiler 58 und der Sicherungsschlitz 59 sind insbesondere aus der Figur 5 ersichtlich, die die Führungsmechanik in einem Zustand zeigt, in dem sich der Diagrammscheibenträger 6 in der Registrierposition befindet. Mit 60 ist eine Zugfeder bezeichnet, die einerseits an der Führungsschiene 43 eingehängt ist andererseits an der Gelenkschiene 18 angreift und diese in die Gelenkposition bewegt, wenn der in der Registrierposition verriegelte Diagrammscheibenträger 6, ausgelöst durch eine Tastenbetätigung entriegelt ist.

Insbesondere die Figur 8 zeigt die raumoptimierte Architektur der Führungsmechanik im Gehäusewinkel zwischen der Seitenwand 39 und einem Boden 61 des Gehäuses 1 und die zusätzliche Verschachtelung der Führungsschiene 43 mit einem an der Seitenwand 30 befestigten Gehäusebauteil 62. An diesem sind Konsolen 63, 64 für die Befestigung einer Leiterplatte des Fahrtschreibers sowie Konsolen 65, 66, 67 und 68 für das Abstützen und Befestigen einer die Registrierorgane und deren Antriebe tragenden Montageplatte ausgebildet. Mit 69 (Figur 4) ist die Rückwand des Gehäuses 1 bezeichnet, die in diesem Bereich für das Anbringen eines Steckersockels freigespart ist. 70 stellt einen an der Gelenkschiene 18 angeformten Anschlag beziehungsweise ein Führungselement dar.

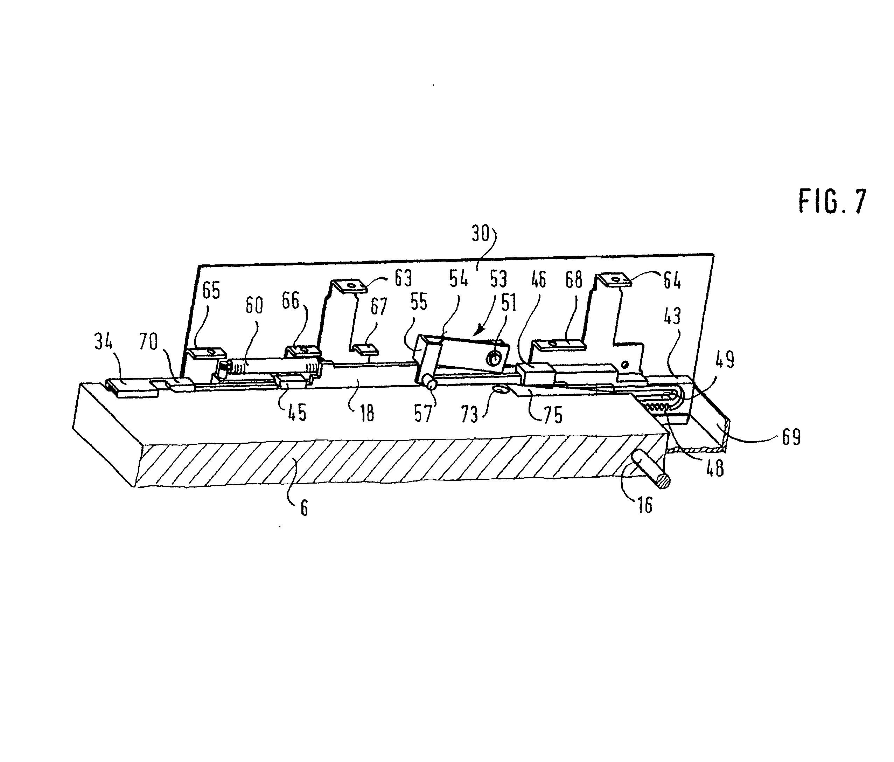

Wie bereits erwähnt, ist der Diagrammscheibenträger 6 in der Registrierposition verriegelt, und zwar derart, daß er in jeder Richtung spielfrei positioniert ist. Diesem Zwecke dienen an einer gefedert gelagerten Brücke 71, die, da sie nicht erfindungswesentlich ist, in Figur 8 nur andeutungsweise dargestellt ist, angeordnete Kegelzapfen 72, welche mit in geeigneter Weise ausgebildeten Bohrungen - in Figur 7 ist eine dargestellt und mit 73 bezeichnet - zusammenwirken. Das Außereingriffbringen der Kegelzapfen erfolgt mittels einer mit der Brücke 71 zusammenwirkenden und von einem Motor angetriebenen Steuerkurve.

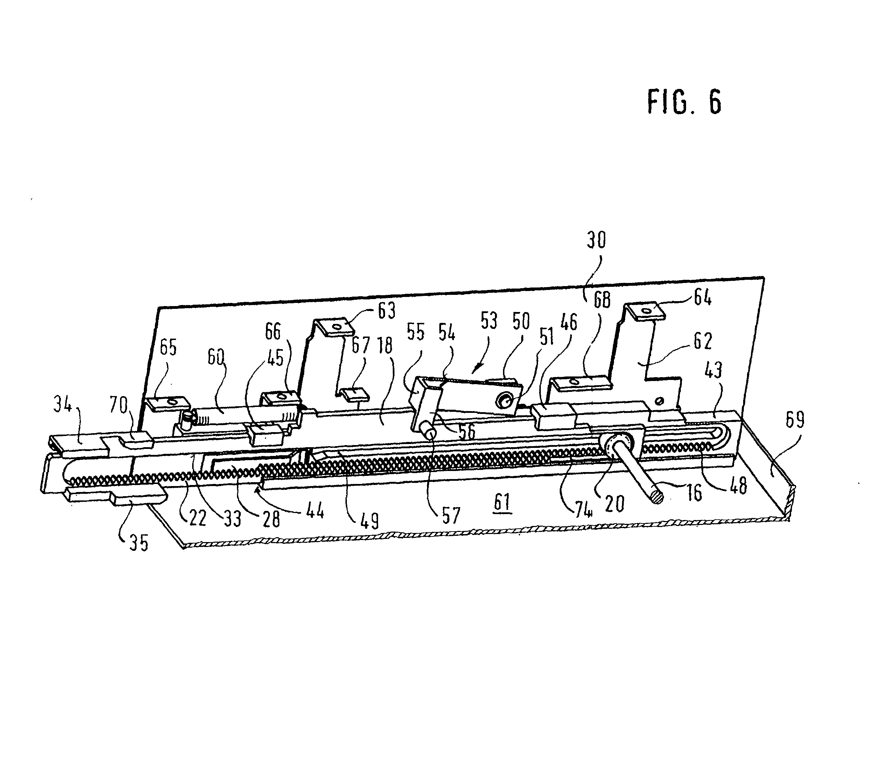

Die Funktion der beschriebenen Führungsmechanik ist folgende: Wird ausgehend von dem in Figur 5 dargestellten Zustand, bei dem sich der Diagrammscheibenträger 6 in der Registrierposition befindet, der Diagrammscheibenträger 6, wie bereits beschrieben, entriegelt, so wird der Diagrammscheibenträger 6 unter der Wirkung der Zugfedern 60 mittels der Gelenkschienen 17, 18 in eine in Figur 6 dargestellte Greifposition verschoben. Dabei rollen die mit der Stützwelle 16 verdrehfest verbundenen Ritzel 19, 20 auf den Verzahnungen 48 der feststehenden Führungsschiene 43 ab. Um dies zu ermöglichen sind die Verzahnungen 21, 22 der Gelenkschienen 17, 18 nicht bis an das jeweilige Ende der Langlöcher 32, 33 ausgebildet, mit anderen Worten, es sind bezüglich der Gelenkschienen 17, 18 einen Freilauf der Stützwelle 16 ermöglichende Freisparungen 74 der Verzahnungen 21, 22 vorgesehen. In dieser selbsttätig erzielten Position, in der der Diagrammscheibenträger 6 von Hand gegriffen, in die Gelenkposition, Figur 4, gezogen und dann verschwenkt werden kann, liegt der Pfeiler 58 der Gelenkschienen 17, 18 an den Stegen 55 der Winkelhebel 53 an. Die Verriegelung der Gelenkschienen 17, 18 wird erst dann erreicht, wenn die in dieser Position, wie Figur 7 zeigt, noch auf dem Diagrammscheibenträger 6 aufliegenden Taststifte 57 beim Herausziehen des Diagrammscheibenträgers 6 abgefallen sind und die Stege 55 in die Sicherungsschlitze 59 eingreifen. Umgekehrt werden beim Einschieben des Diagrammscheibenträgers 6 über schiefe Ebenen 75 sowohl die Brücke 71 verschwenkt und die Kegelzapfen 72 mit den Bohrungen 73 in Eingriff gebracht als auch über die Taststifte 57 die Winkelhebel 53 verschwenkt, so daß die Verriegelung der Gelenkschienen 17, 18 aufgehoben wird. Wesentlich ist, daß in jeder Stellung der Stützwelle 16 die Ritzel 19, 20 sich in Eingriff mit Verzahnungen befinden und auf diese Weise ein Verkanten des Diagrammscheibenträgers 6 vermieden ist.

Selbstverständlich läßt sich der Schwenkwinkel des Diagrammscheibenträgers 6 je nach Ausbildung der zusammenwirkenden Bauteile (34 und 41, 42 sowie 40 und 35) anders gestalten als in dem bevorzugten Ausführungsbeispiel dargestellt; letztlich läßt sich auch eine Verschwenkbarkeit von 90° gegenüber der Bewegungsebene innerhalb des Gehäuses 1 erzielen. Der Vorteil der im vorstehend beschriebenen Ausführungsbeispiel vorgesehenen Anschlag- und Gelenkmittel ist darin zu sehen, daß die Frontwand des Fahrtschreibers so gestaltet werden kann, als sei der Diagrammscheibenträger 6 eine lediglich in einer Ebene bewegbaren Schublade. Vorteilhaft ist ferner, daß die wirkenden Kräfte von zwei Anschlagkonstruktionen aufgefangen werden. Das heißt, es ist eine Addition der Hebelarme wirksam, was zu einer stabilen Lage des Diagrammscheibenträgers in der verschwenkten Stellung und zu einer höheren Bruchsicherheit der Gelenkkonstruktion beiträgt.

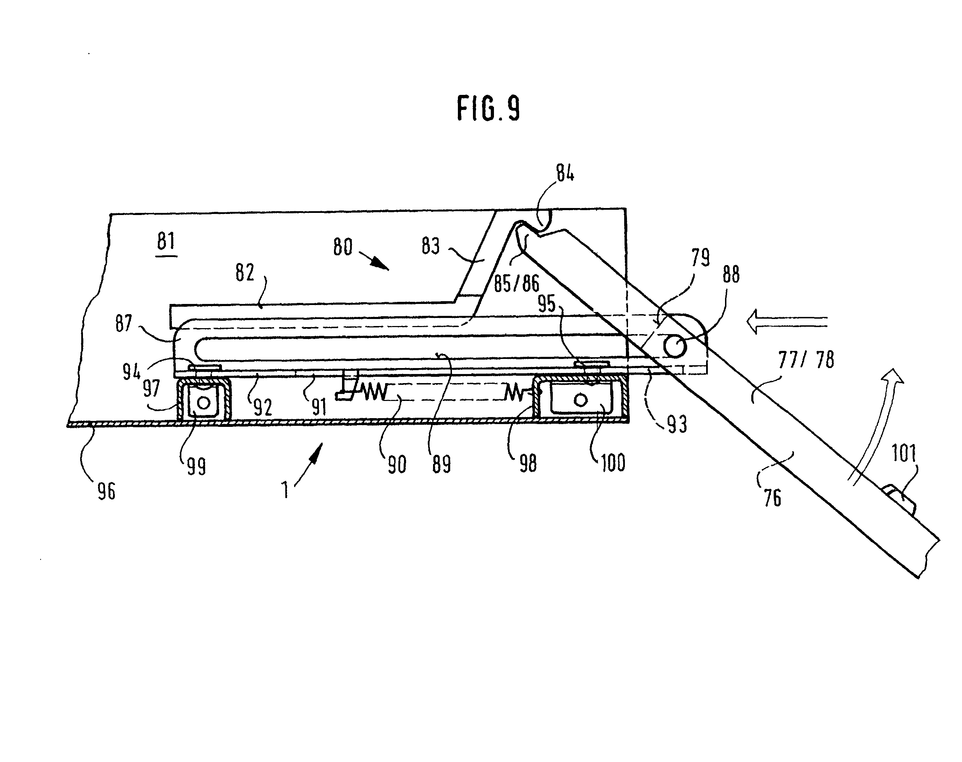

Die Figur 9 zeigt, weitgehend schematisch, ein weiteres Ausführungsbeispiel des erfindungsgemäßen Fahrtschreibers, und zwar im verschwenkten Zustand eines Diagrammscheibenträgers 76. Bei diesem Ausführungsbeispiel sind dem Diagrammscheibenträger 76 beidseitig Wangen 77, 78 zugeordnet, die über die Rückwand 79 des Diagrammscheibenträgers 76 hinausgreifen und mit Führungsleisten, von denen in Figur 9 eine dargestellt und mit 80 bezeichnet ist, zusammenwirken. Die Führungsleisten 80, die mit den Seitenwänden 84 fest verbunden sind, bestehen jeweils aus einer der Parallelführung dienenden Schiene 82, aus einem verstärkten, die Gelenkposition bestimmenden Schenkel 83 sowie aus einem vorzugsweise unmittelbar unter dem nicht dargestellten Deckel des Gehäuses 1 liegenden Anschlagkopf 84. Wie aus der Figur 9 ersichtlich ist, wirken die Anschlagköpfe 84 mit an den Wangen 77, 78 angeformten Fingern 85, 86 in Richtung der Drehbewegung des Diagrammscheibenträgers 76 zusammen.

Der Vollständigkeit halber sei noch erwähnt, daß bei dem Ausführungsbeispiel gemäß Figur 9 lediglich zwei L-förmig ausgebildete Gelenkschienen, von denen eine, 87, dargestellt ist, zur Führung des Diagrammscheibenträgers 76 vorgesehen sind. Mit 88 sind eine dem Diagrammscheibenträger 76 zugeordnete Achse oder beidseitig angeordnete Achselemente bezeichnet, welchen in den Gelenkschienen 87 Langlöcher 89 zugeordnet sind, die ein Verschieben des Diagrammscheibenträgers 76 aus der dargestellten Einlege-/Entnahmeposition in die Registrierposition ermöglichen. Dabei werden auch die Gelenkschienen 87, die unter der Wirkung von Zugfedern 90 stehen, aus der Gelenkposition in das Gehäuse 1 zurückgeschoben. Hierzu sind in den Lagerschenkeln 91 der Gelenkschienen 87 Langlöcher 92, 93 ausgebildet. Die Lagerung der Lagerschenkel 91 erfolgt mittels durch die Langlöcher 92, 93 durchgreifende Ansatzbolzen 94, 95, welche in u-profilierten, dem Boden 96 des Gehäuses 1 zugeordneten Stützen 97, 98 befestigt sind. Mit 99, 100 sind an den Stützen 97, 98 angeformte Lappen bezeichnet, die der Befestigung der Stützen an den Seitenwänden 81 des Gehäuses 1 dienen. Mit 101 ist, wie bereits erwähnt, ein zentral der Diagrammscheibenauflage 76 zugeordneter, der Verbindung mit einem im Gehäuse 1 gelagerten Diagrammscheibenniederhalter dienender Kupplungszapfen bezeichnet.

## Patentansprüche

1. Fahrtschreiber mit einem quaderförmigen Gehäuse, in welchem zur sichtbaren Darstellung von Fahrtdaten Diagrammscheiben Anwendung finden, für deren Halterung ein Diagrammscheibenträger vorgesehen und derart angeordnet ist, daß die Diagrammscheiben zwischen einer Registrierposition innerhalb des Gehäuses, in welcher der Diagrammscheibenträger spielfrei verriegelt ist, und einer von außen zugänglichen Einlege-/Entnahmeposition , in welcher der Diagrammscheibenträger an einem Anschlag anliegt, bewegbar sind, und der Diagrammscheibenträger (6) zwischen der Registrierposition und der Einlege-/Entnahmeposition geradlinig verschiebbar und um eine dem Diagrammscheibenträger (6) zugeordnete Achse schwenkbar ist, wobei die Achse mit dem Herausziehen des Diagrammscheibenträgers (6) in eine stabile Gelenkposition bringbar ist,
**dadurch gekennzeichnet,**
**daß** die Achse in mit Langlöchern (32, 33) versehene Gelenkschienen (17, 18) eingreift und
**daß** die Gelenkschienen (17, 18) längsverschiebbar derart gelagert sind, daß das jeweils eine Langlochende beim Verschieben des Diagrammscheibenträgers (6) außerhalb des Gehäuses (1) bringbar ist.

2. Fahrtschreiber nach Anspruch 1,
**dadurch gekennzeichnet,**
**daß** die Gelenkschienen (17,18) in Verschieberichtung gefedert (Zugfedern 60) geführt sind.

3. Fahrtschreiber nach Anspruch 1,
**dadurch gekennzeichnet,**
**daß** den Gelenkschienen (17, 18) Verriegelungsmittel zugeordnet und daß die Verriegelungsmittel mittels des Diagrammscheibenträgers (6) in und außer Eingriff mit den Gelenkschienen (17, 18) bringbar sind.

4. Fahrtschreiber nach Anspruch 1,
**dadurch gekennzeichnet,**
**daß** die Gelenkschienen (17, 18) starr miteinander verbunden sind.

5. Fahrtschreiber nach Anspruch 1,
**dadurch gekennzeichnet,**
**daß** die Gelenkschienen (17, 18) flach ausgebildet und in im Gehäuse (1 ) befestigten, wenigstens teilweise u-profilierte Führungsschienen (43) verschiebbar gelagert sind.

6. Fahrtschreiber nach Anspruch 5,
**dadurch gekennzeichnet,**
**daß** die Achse durch die Gelenkschienen (17, 18) beidseitig durchgreift und daß in den Führungsschienen (43) der Achse zugeordnete Führungsnute (49) ausgebildet sind.

7. Fahrtschreiber nach Anspruch 1,
**dadurch gekennzeichnet,**
**daß** die Achse als eine im Diagrammscheibenträger (6) gelagerte Stützwelle (16) ausgebildet ist,
**daß** an den Enden der Stützwelle (16) Ritzel (19, 20) angebracht sind und daß jeweils in der einen Wand eines Langloches (32, 33) der Gelenkschienen (17, 18) eine den Ritzeln (19, 20) zugeordnete Verzahnung (21, 22) ausgebildet ist.

8. Fahrtschreiber nach Anspruch 1,
**dadurch gekennzeichnet,**
**daß** die Gelenkschienen (17, 18) L-profiliert ausgebildet sind und auf am Boden des Gehäuses (1) angebrachten Stützen verschiebbar gelagert sind.

9. Fahrtschreiber nach Anspruch 7,
**dadurch gekennzeichnet,**
**daß** in den Führungsschienen (43) den Verzahnungen (21, 22) in den Gelenkschienen (17, 18) entsprechende Verzahnungen (48) ausgebildet sind derart, daß die Verzahnungen (21, 22 und 48) deckungsgleich sind, wenn sich die Gelenkschienen (17, 18) in der Gelenkposition befinden und daß die Gelenkschienen (17,18) im Bereich des der Gelenkseite entgegengesetzten Endes wenigstens so weit verzahnungsfrei ausgebildet sind (Freisparung 74), daß ein Freilauf der Stützwelle (16) während der Bewegung der Gelenkschienen (17, 18) gegeben ist.

10. Fahrtschreiber nach Anspruch 1,
**dadurch gekennzeichnet,**
**daß** die Schwenkbewegung des Diagrammscheibenträgers (76) im Zusammenwirken mit am Diagrammscheibenträger (76) ausgebildeten Wangen (77, 78) durch an den Seitenwänden (81 ) des Gehäuses (1 ) vorgesehene, mit Anschlagköpfen (84) versehenen Führungsleisten (80) begrenzt ist.

11. Fahrtschreiber nach Anspruch 1,
**dadurch gekennzeichnet,**
**daß** die Schwenkbewegung des Diagrammscheibenträgers (6) durch an den Gelenkschienen (17, 18) angewinkelt angeformten Anschläge und seitens des Diagrammscheibenträgers (6) ausgebildete, den Anschlägen zugeordnete Fangarme (41, 42) begrenzt ist.

12. Fahrtschreiber nach Anspruch 11,
**dadurch gekennzeichnet,**
**daß** an jeder Gelenkschiene (17,18) sowohl an der Ober- als auch an der Unterkante Anschläge ausgebildet sind, denen stirnseitig einerseits die Fangarme (41, 42) andererseits im Diagrammscheibenträger (6) ausgebildete Anschlagflächen (40) zugeordnet sind.

13. Fahrtschreiber nach Anspruch 11,
**dadurch gekennzeichnet,**
**daß** an den Gelenkschienen (17, 18) im Zusammenwirken mit den
Fangarmen (41, 42) einen Überhub des Diagrammscheibenträgers (6) beim Zurückschieben in das Gehäuse (1 ) vermeidende Konsolen (35) angeformt sind.

14. Fahrtschreiber nach Anspruch 11,
**dadurch gekennzeichnet,**
**daß** die Fangarme (41, 42) an im Diagrammscheibenträger (6) gefedert gelagerten Schiebern angeformt sind.

15. Fahrtschreiber nach Anspruch 1,
**dadurch gekennzeichnet,**
**daß** an den Gelenkschienen (17, 18) eine Schwenkbewegung des Diagrammscheibenträgers (6) vor Erreichen der Gelenkposition Verhindernde Führungsleisten (34, 35) ausgebildet sind.

16. Fahrtschreiber nach Anspruch 3,
**dadurch gekennzeichnet,**
**daß** die gefedert gelagerten Gelenkschienen (17, 18) zwischen der Registrierposition des Diagrammscheibenträgers (6), in der dieser in geeigneter Weise verriegelt ist, und der verriegelten Gelenkposition der Gelenkschienen (17, 18) mit dem Diagrammscheibenträger (6) kraftschlüssig in Wirkverbindung stehen.

17. Fahrtschreiber nach Anspruch 16,
**dadurch gekennzeichnet,**
**daß** die Gelenkschienen (17, 18) und der Diagrammscheibenträger (6) während deren kraftschlüssiger Verbindungsphase zusätzlich formschlüssig verbunden sind.

18. Fahrtschreiber nach Anspruch 17,
**dadurch gekennzeichnet,**
**daß** einerseits die Stützwelle (16) in die Führungsnute (49) eingreift, andererseits, zwischen dem Diagrammscheibenträger (6) und den Gelenkschienen (17, 18) Steg-Schlitz-Verbindungen (23/24, 25/26) vorgesehen sind.

19. Fahrtschreiber nach Anspruch 3,
**dadurch gekennzeichnet,**
**daß** die Verriegelungsmittel einen gefedert gelagerten Winkelhebel (53) aufweisen, welcher mittels eines angeformten Steges (55) die jeweilige Gelenkschiene (17, 18) übergreift,
**daß** der Winkelhebel (53) mit einem Taststift (57) versehen ist derart, daß der Winkelhebel (53) in den Bewegungsraum des Diagrammscheibenträgers (6) eingreift,
**daß** an jeder Gelenkschiene (17, 18) ein Pfeiler (58) angeformt ist und daß bündig mit einer Stirnseite des Pfeilers (58) in der Gelenkschiene (17, 18) ein dem Steg (55) zugeordneter Sicherungsschlitz (59) ausgebildet ist.

## Claims

1. Tachograph with parallelepiped housing in which diagram discs are used to visibly display travel data, a diagram disc carrier being provided to hold the said disc and being arranged in such a way that the diagram discs can be moved between a recording position within the housing in which the diagram disc carrier is locked free of play, and an insertion/removal position which is accessible from the outside and in which the diagram disc carrier goes against a stop, and the diagram disc carrier (6) can be displaced linearly between the recording position and the insertion/removal position and can be pivoted about an axis which is assigned to the diagram disc carrier (6), the axis being capable of being moved into a stable articulated position when the diagram disc carrier (6) is pulled out, **characterized in that** the axis engages in articulated rails (17, 18) which are provided with elongated holes (32, 33), and **in that** the articulated rails (17, 18) are mounted in a longitudinally displaceable fashion such that the respective one end of an elongated hole can be moved outside the housing (1) when the diagram disc carrier (6) is displaced.

2. Tachograph according to Claim 1, **characterized in that** the articulated rails (17, 18) are guided with spring loading (tension springs 60) in the displacement direction.

3. Tachograph according to Claim 1, **characterized in that** locking means are assigned to the articulated rails (17, 18), and **in that** the locking means can be moved into and out of engagement with the articulated rails (17, 18) by means of the diagram disc carrier (6) .

4. Tachograph according to Claim 1, **characterized in that** the articulated rails (17, 18) are rigidly connected to one another.

5. Tachograph according to Claim 1, **characterized in that** the articulated rails (17, 18) are of flat construction and are displacably mounted in guide rails (43) which are attached to the housing (1) and have an at least partially u-shaped profile.

6. Tachograph according to Claim 5, **characterized in that** the axis engages through the articulated rails (17, 18) on both sides, and **in that** guide grooves (49) which are assigned to the axis are formed in the guide rails (43).

7. Tachograph according to Claim 1, **characterized in that** the axis is formed as a supporting shaft (16) which is mounted in the diagram disc carrier (6), **in that** pinions (19, 20) are provided at the ends of the supporting shaft (16), and **in that** a toothing (21, 22) which is assigned to the pinions (19, 20) is formed in each case in one of the walls of an elongated hole (32, 33) of the articulated rails (17, 18).

8. Tachograph according to Claim 1, **characterized in that** the articulated rails (17, 18) are constructed with L-shaped section and are displaceably mounted on supports provided on the bottom of the housing (1).

9. Tachograph according to Claim 7, **characterized in that** toothings (48) which correspond to the toothings (21, 22) in the articulated rails (17, 18) are formed in the guide rails (43) such that they ensure that the toothings (21, 22 and 48) are congruent if the articulated rails (17, 18) are in the joint position, and **in that** the articulated rails (17, 18) are formed, in the region of the end opposite the joint side, to be free of toothings (cutout 74) at least to such an extent that the supporting shaft (16) can move freely during the movement of the articulated rails (17, 18).

10. Tachograph according to Claim 1, **characterized in that** the pivoting movement of the diagram disc carrier (76) is bounded, while interacting with side portions (77, 78) formed on the diagram disc carrier (76), by guide strips (80) which are provided on the side walls (81) of the housing (1) and have stop heads (84).

11. Tachograph according to Claim 1, **characterized in that** the pivoting movement of the diagram disc carrier (6) is bounded by stops which are formed at an angle on the articulated rails (17, 18), and catch arms (41, 42) which are formed on the diagram disc carrier (6) and are assigned to the stops.

12. Tachograph according to Claim 11, **characterized in that** stops are formed on each articulated rail (17, 18), both on the upper edge and on the lower edge, and are assigned the catch arms (41, 42) at one end and stop faces (40), formed in the diagram disc carrier (6), at the other end.

13. Tachograph according to Claim 11, **characterized in that** brackets (35) which prevent, while interacting with the catch arms (41, 42), the diagram disc carrier (6) travelling too far when it is pushed back into the housing (1) are formed on the articulated rail (17, 18).

14. Tachograph according to Claim 11, **characterized in that** the catch arms (41, 42) are integrally formed on slides which are mounted with spring loading in the diagram disc carrier (6).

15. Tachograph according to Claim 1, **characterized in that** guide strips (34, 35) which prevent a pivoting movement of the diagram disc carrier (6) before the joint position is reached are formed on the articulated rails (17, 18).

16. Tachograph according to Claim 3, **characterized in that** the articulated rails (17, 18) which are mounted with spring loading are operatively connected to the diagram disc carrier (6) in a frictionally locking fashion between the recording position of the diagram disc carrier (6) in which the latter is suitably locked, and the locked joint position of the articulated rails (17, 18).

17. Tachograph according to Claim 16, **characterized in that**, during the frictionally locking connection phase of the articulated rails (17, 18) and the diagram disc carrier (6) they are additionally connected to one another in a positively locking fashion.

18. Tachograph according to claim 17, **characterized in that** the supporting shaft (16) engages at one end in the guide groove (49) and at the other end web-slot connections (23/24, 25/26) are provided between the diagram disc carrier (6) and the articulated rails (17, 18).

19. Tachograph according to Claim 3, **characterized in that** the locking means have an angular lever (53) which is mounted in a spring-loaded fashion and which engages over the respective articulated rail (17, 18) by means of an integrally formed web (55), **in that** the angular lever (53) is provided with a sensing pin (57) in such a way that the angular lever (53) engages in the movement space of the diagram disc carrier (6), **in that** a pillar (58) is integrally formed on each articulated rail (17, 18), and **in that** a securing slit (59) which is assigned to the web (55) is formed flush with an end side of the pillar (58) in the articulated rail (17, 18).

## Revendications

1. Tachygraphe avec boîtier parallélépipédique, dans lequel l'on utilise des disques enregistreurs pour présenter de manière visible les données de roulage, un support étant prévu pour les disques enregistreurs et étant disposé de telle sorte que les disques enregistreurs puissent être déplacés entre une position d'enregistrement située à l'intérieur du boîtier, dans laquelle le support de disques enregistreurs est verrouillé sans jeu, et une position d'insertion et d'enlèvement accessible de l'extérieur, dans laquelle le support de disques enregistreurs repose contre une butée, le support (6) de disques enregistreurs pouvant glisser en ligne droite entre la position d'enregistrement et la position d'insertion et d'enlèvement et pouvant pivoter autour d'un axe associé au support (6) de disques enregistreurs, l'axe pouvant être amené dans une position articulée stable lors de l'extraction du support (6) de disques enregistreurs, **caractérisé en ce que** l'axe s'engage dans des rails articulés (17, 18) dotés de trous oblongs (32, 33) et **en ce que** les rails articulés (17, 18) sont montés à coulissement longitudinal de telle sorte que l'extrémité de chaque trou oblong puisse être amenée hors du boîtier (1) lors du coulissement du support (6) de disques enregistreurs.

2. Tachygraphe selon la revendication 1, **caractérisé en ce que** les rails articulés (17, 18) sont guidés élastiquement dans la direction de coulissement par des ressorts de traction (60).

3. Tachygraphe selon la revendication 1, **caractérisé en ce que** des moyens de verrouillage sont associés aux rails articulés (17, 18) et **en ce que** les moyens de verrouillage peuvent être engagés et désengagés des rails articulés (17, 18) au moyen du support (6) de disques enregistreurs.

4. Tachygraphe selon la revendication 1, **caractérisé en ce que** les rails articulés (17, 18) sont reliés rigidement l'un à l'autre.

5. Tachygraphe selon la revendication 1, **caractérisé en ce que** les rails articulés (17, 18) sont plats et sont montés à coulissement dans des rails de guidage (43) au moins en partie profilés en U et fixés dans le boîtier (1).

6. Tachygraphe selon la revendication 5, **caractérisé en ce que** l'axe traverse des deux côtés les rails articulés (17, 18) et **en ce que** des rainures de guidage (49) associées à l'axe sont réalisées dans les rails de guidage (43).

7. Tachygraphe selon la revendication 1, **caractérisé en ce que** l'axe est configuré comme arbre de soutien (16) monté dans le support (6) de disques enregistreurs, **en ce que** des pignons (19, 20) sont installés aux extrémités de l'arbre de soutien (16) et **en ce qu'**une denture (21, 22) associée aux pignons (19, 20) est réalisée dans l'une des parois de chaque trous oblongs (32, 33) des rails articulés (17, 18).

8. Tachygraphe selon la revendication 1, **caractérisé en ce que** les rails articulés (17, 18) sont réalisés avec un profil en L et sont montés à coulissement sur des supports installés sur le fond du boîtier (1).

9. Tachygraphe selon la revendication 7, **caractérisé en ce que** dans les rails de guidage (43) sont formées des dentures (48) qui correspondent aux dentures (21, 22) des rails articulés (17, 18) de telle sorte que les dentures (21, 22 et 48) se recouvrent lorsque les rails articulés (17, 18) sont dans la position articulée et **en ce que**, dans la zone de leur extrémité non tournée vers le côté articulé, les rails articulés (17, 18) sont réalisés sans denture (tronçon 74) sur une distance suffisante pour permettre à l'arbre de soutien (16) de tourner librement pendant le déplacement des rails articulés (17, 18).

10. Tachygraphe selon la revendication 1, **caractérisé en ce qu'**en coopération avec des joues (77, 78) formées sur le support (76) de disques enregistreurs, le déplacement de pivotement du support (76) de disques enregistreurs est délimité par des languettes de guidage (80) prévues sur les parois latérales (81) du boîtier (1) et dotées de têtes de butée (84).

11. Tachygraphe selon la revendication 1, **caractérisé en ce que** le déplacement de pivotement du support (6) de disques enregistreurs est limité par des butées formées en coude sur les rails articulés (17, 18) et par des bras de saisie (41, 42) réalisés sur le support (6) de disques enregistreurs et associés aux butées.

12. Tachygraphe selon la revendication 11, **caractérisé en ce que** tant sur le côté supérieur que sur le côté inférieur de chaque rail articulé (17, 18) sont formées des butées auxquelles sont associés d'une part les bras de saisie (41, 42) du côté frontal et d'autre part des surfaces de butée (40) réalisées dans le support (6) de disques enregistreurs.

13. Tachygraphe selon la revendication 11, **caractérisé en ce que** des consoles (35) qui, en association avec les bras de saisie (41, 42), empêchent que le support (6) de disques enregistreurs se relève à l'excès lorsqu'il est reculé dans le boîtier (1), sont formées sur les rails articulés (17, 18).

14. Tachygraphe selon la revendication 11, **caractérisé en ce que** les bras de saisie (41, 42) sont formés sur des coulisseaux montés élastiquement dans le support (6) de disques enregistreurs.

15. Tachygraphe selon la revendication 1, **caractérisé en ce que** des languettes de guidage (34, 35) qui empêchent le support (6) de disques enregistreurs de pivoter avant qu'il atteigne la position articulée sont formées dans les rails articulés (17, 18).

16. Tachygraphe selon la revendication 3, **caractérisé en ce qu'**entre la position d'enregistrement du support (6) de disques enregistreurs, dans laquelle il est verrouillé de manière appropriée, et la position articulée verrouillée des rails articulés (17, 18), les rails articulés (17, 18) montés élastiquement coopèrent en correspondance mécanique avec le support (6) de disques enregistreurs.

17. Tachygraphe selon la revendication 16, **caractérisé en ce que** pendant leur phase de liaison en correspondance mécanique, les rails articulés (17, 18) et le support (6) de disques enregistreurs sont de plus reliés en correspondance géométrique.

18. Tachygraphe selon la revendication 17, **caractérisé en ce que** d'une part l'arbre de soutien (16) s'engage dans la rainure de guidage (49) et **en ce que** d'autre part des liaisons à languettes et à fentes (23/24, 25/26) sont prévues entre le support (6) de disques enregistreurs et les rails articulés (17, 18).

19. Tachygraphe selon la revendication 3, **caractérisé en ce que** les moyens de verrouillage présentent un levier coudé (53) monté élastiquement, qui chevauche les rails articulés (17, 18) respectifs au moyen d'une traverse (55) qui y est formée, **en ce que** le levier coudé (53) est doté d'une tige à touche (57) de telle sorte que le levier coudé (53) s'engage dans l'espace de déplacement du support (6) de disques enregistreurs, **en ce qu'**une colonne (58) est formée sur chaque rail articulé (17, 18) et **en ce qu'**une fente de blocage (59) associée à la traverse (55) est réalisée dans les rails articulés (17, 18), à chant avec un côté frontal de la colonne (58).
